# EUROPEAN PATENT SPECIFICATION

(11) **EP 3 650 254 B1**
(45) Date of publication and mention of the grant of the patent: **15.09.2021**
(21) Application number: 19000493.7
(22) Date of filing: 30.10.2019
(51) Int. Cl.: B60J 1/16

(54) **FIXED WINDOW OF A MOTOR VEHICLE WITH OPENING HATCH**
FESTE FENSTER DES FAHRZEUGS MIT ÖFFNUNGSFLÜGEL
FENÊTRE FIXE DE VÉHICULE AVEC VOLET OUVRANT

(30) Priority: 07.11.2018 IT 201800010136
(43) Date of publication of application: 13.05.2020
(73) Proprietor: Romano, Francesco, 10090 Castiglione Torinese (TO) (IT)
(72) Inventor: Romano, Francesco, 10090 Castiglione Torinese (TO) (IT)
(74) Representative: Aprà, Mario

(56) References cited:
- EP-A2- 1 674 311
- BR-A- PI0 700 592
- CN-Y- 201 246 075
- US-B2- 8 186 103

## Description

The present invention relates to a fixed window of a motor vehicle with opening hatch. An example of such a vehicle is disclosed in BR PI0 700 592 A.

A fixed window with opening hatch is used in sports vehicles, In particular In racing cars. It should be noted that said known hatch is not configured to be Impermeable, as the entire cockpit of a racing car is, in any case, exposed to infiltration by water, for example rainwater. Furthermore, said known hatch is not provided with burglar-proof means, as racing vehicles are obviously not left unattended in public places,

A need Is felt to create motor vehicles approved as road worthy, that are provided with at least one fixed window with opening hatch, according to the style typical of racing cars and that can also satisfy the requirements of impermeability, particularly to rainwater, and safety from burglary.

Therefore, the aim of the invention is to provide a fixed window for a motor vehicle with opening hatch, which satisfies the requirements of impermeability, In particular to rainwater, for installation on motor vehicles that are approved as road worthy.

Another aim of the Invention Is to provide a fixed window for a motor vehicle with opening hatch that satisfies the requirements of safety from burglary, for installation on motor vehicles that are approved as road worthy.

A further aim of the invention is to provide a fixed window of a motor vehicle with opening hatch that has a simple structure and is safe and reliable to operate.

In view of said alms, the present Invention provides a fixed window of a motor vehicle with opening hatch, the essential characteristics of which are the subject of claim 1.

Further advantageous characteristics of the invention are described in the dependent claims.

Characteristics and advantages of the invention will be clearer from the detailed description that follows of an example embodiment, with reference to the drawing, that shows details of importance for the invention, and from the claims.

The characteristics illustrated herein must not necessarily be considered in scale and are represented in such a way that the peculiarities according to the invention are clearly highlighted.

The various characteristics can be realised individually or combined with each other in any way, as alternative embodiments of the invention.

In the drawing:

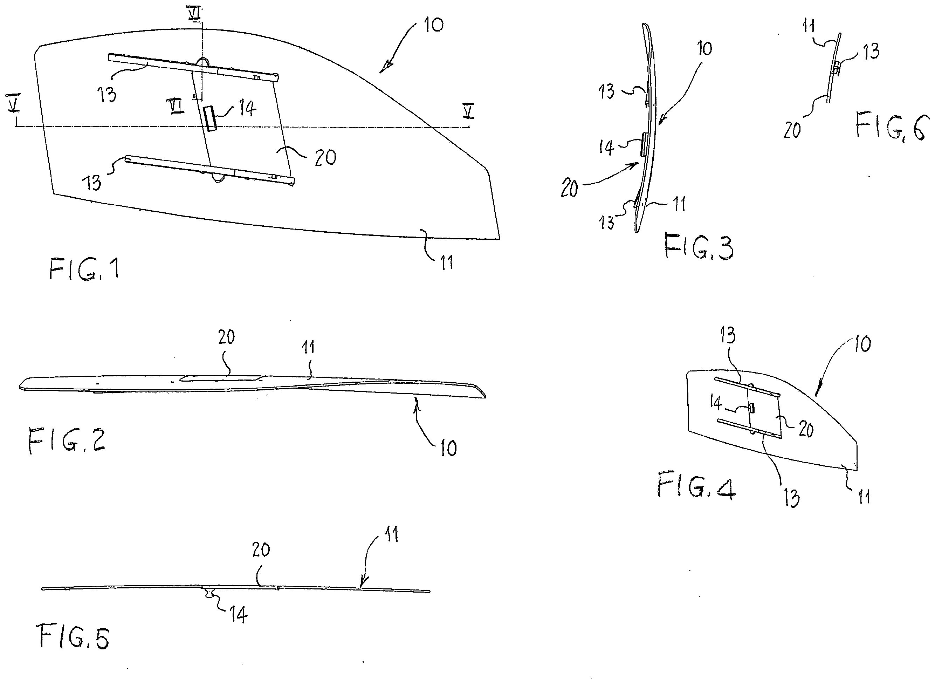

- figures 1 to 6 Illustrate an example embodiment of the fixed window of a motor vehicle with opening hatch according to the invention, respectively In an internal front view (fig. 1), a view from above (fig. 2), a side view (fig. 3), an isometric view (fig. 4), and a cross-section along lines V-V (fig. 5) and VI-VI (fig. 6), respectively;

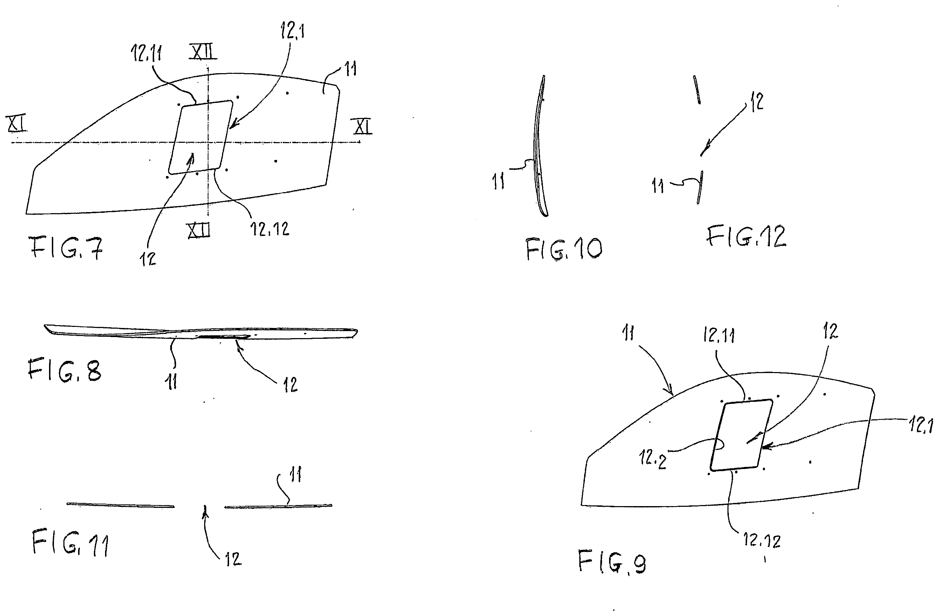

- figures 7 to 12 illustrate a fixed glass pane of the window according to figures 1 to 6, respectively In an external front view (fig. 7), a view from above (fig. 8), an isometric view (fig. 9), a side view (fig. 10) and a cross-section along lines XI-XI (fig. 11) and XII-XII (fig. 12), respectively;

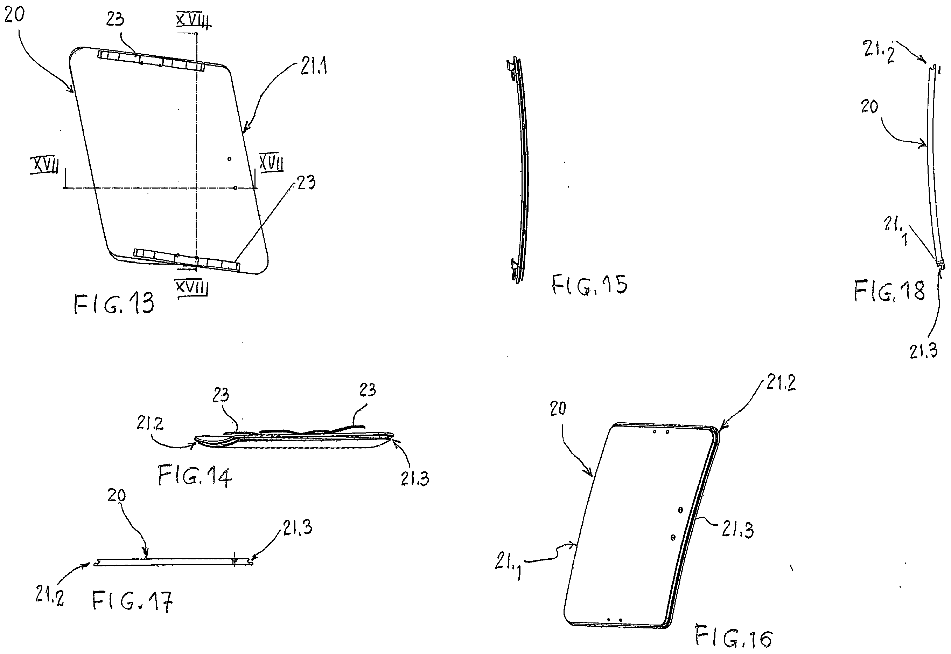

- figures 13 to 18 illustrate a mobile hatch in the window according to figures 1 to 6, respectively in an internal front view (fig. 13), a view from above (fig. 14), a side view (fig. 15), an isometric view (fig. 16), and a cross-section along lines XVII-XVII (fig. 17) and XVIII-XVIII (fig. 18), respectively;

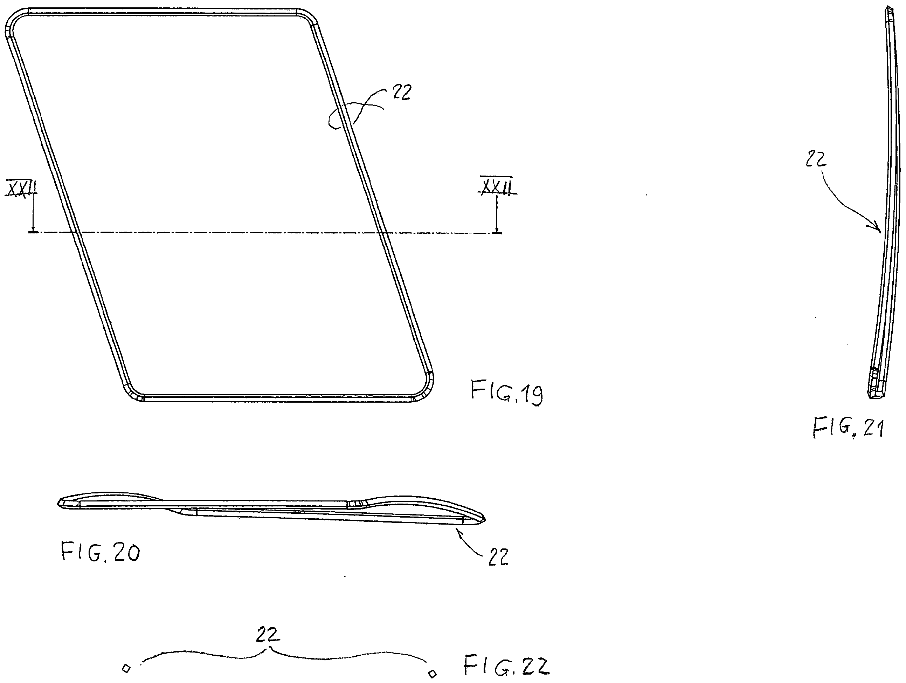

- figures 19 to 22 illustrate a seal gasket for the window according to figures 1 to 6, respectively in an front view (fig. 19), a view from above (fig. 20), a side view (fig. 21), and a cross-section along line and XXII-XXII (fig. 22), respectively;

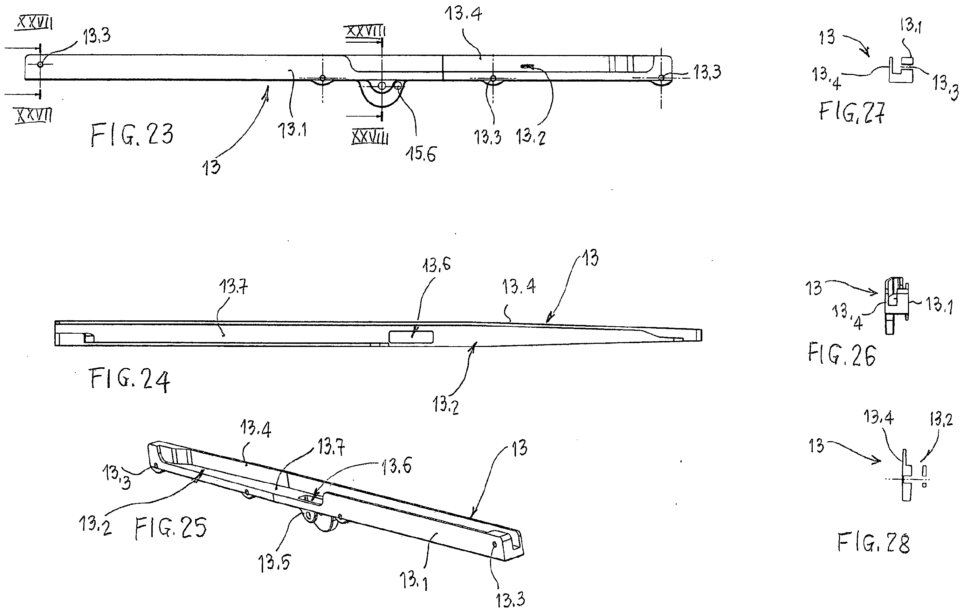

- figures 23 to 28 Illustrate a straight guide of the window according to figures 1 to 6, respectively in a front view (fig. 23), a view from above (fig. 24), an Isometric view (fig. 25), a side view (fig. 26) and a cross-section along lines XXVII-XXVII (fig. 27) and XXVIII-XXVIII (fig. 28), respectively;

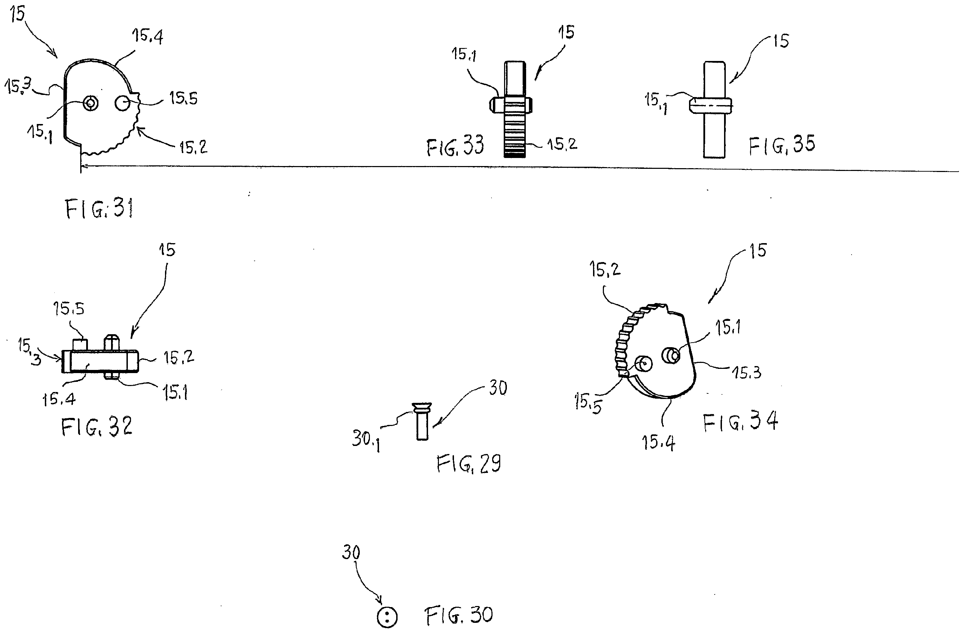

- figures 29 and 30 are side (fig. 29) and front views (fig. 30), In different scales, of a screw with seal ring engaged in the window according to figures 1 to 6;
- figures 31 to 35 illustrate a lock pawl wheel for the window according to figures 1 to 6, respectively in an front view (fig. 31), a view from above (fig. 32), a side view (fig. 33), an isometric view (fig. 34), and an axial cross-section view (fig. 35), respectively.

With reference to the attached drawing, 10 (figures 1 - 5) indicates as a whole the fixed window of a motor vehicle with opening hatch, according to an example embodiment of the Invention. Said window 10 comprises a so- called glass window pane 11, fixed to close a corresponding opening in the door of a motor vehicle and made, for example, of polycarbonate. Said fixed glass pane 11 has, in a central area, an opening 12 (figures 7 - 11) having a quadrangular edge 12.1, generally rectangular, with rounded angles and in which the shorter sides are inclined by a few degrees with respect to the longitudinal direction of said glass pane 11. In particular, 12.11 indicates the upper shorter side and 12.12 the lower shorter side of the edge 12.1 of said opening 12.

Said edge 12.1 of the opening 12 has a continuous bevelling of the sides and corner areas, forming a chamfer 12.2 (figures 9, 11, 12) with a continuous flare that increases towards the internal surface of said glass pane 11. Indicated by 20 (figures 13 - 18) is a mobile hatch, provided with a closure for said opening 12 in the fixed glass pane 11, made for example of polycarbonate.

In particular, said hatch 20 has a thickness corresponding to that of said glass pane 11, a shape corresponding to the ideal extension of the surface of said glass pane 11 in correspondence with said opening 12 and a quadrangular edge 21.1 substantially corresponding to the quadrangular edge 12.1 of said opening 12 in the glass pane 11. Furthermore, said hatch 20 presents a continuous bevelling of the sides and the corner areas of said edge 21.1 forming a chamfer 21.2 (figures 14 - 18) with a continuous flare that decreases towards the external surface of said hatch 20, so that said hatch 20, arranged to close said opening 12, creates with said same opening 12 a positive fit coupling, in which the respective adjacent chamfered edges 12.2, 21.2 realise a mutual Interpenetration with self-centring effect in the shape of a conical centring, producing a first level of Impermeability, while said hatch 20 is disposed flush with the internal and external surfaces of said fixed glass pane 11.

Furthermore, said edge 21.1 of said hatch 20 presents a continuous groove 21.3 (figures 14 - 18), in which is housed a corresponding sealing gasket 22 (figures 19 - 22) in elastomer material, for example in EPDM (EthylenePropylene Diene Monomer). Said sealing gasket 22 ensures, when said hatch 20 is arranged to close said opening 12, the impermeability of said opening 12 of the window 10, in particular to rainwater, as a result of its elastic compression between said opposed chamfers 12.2, 21.2.

On the Inner face of the glass pane 11 and in correspondence with the shorter sides, upper 12.11 and lower 12.12, of said edge 12.1 of the opening 12, slide guide means are provided, configured as two straight guides 13, parallel to each other and with respect to said shorter sides 12.11, 12.12. Said straight guides 13 (figures 1, 23 - 28) are created, for example, from polycarbonate. Furthermore, said straight guides 13 extend beyond said opening 12, In a same direction and for an overall length corresponding to at least twice the length of the respective short side 12.11 and 12.12 of said edge 12.1.

In particular, each of said straight guides 13 is created as a channel with a general "U" shaped section, open towards said opening 12 In the glass pane 11 and presents, in a lateral wall 13.1 of said "U" shaped section that is in juxtaposition with the internal surface of said glass pane 11, a groove 13.2 of a length greater than the corresponding short side 12.11 and 12.12 of said edge 12.1 of the opening 12 and that faces out with respect to said hatch 20, disposed to close said opening 12.

It will be noted that said slide guides 13 present mounting through holes 13.3 that coincide with analogous holes In said glass pane 11 and that, through said holes, screws 30 with elastic sealing ring 30.1 (fig. 29) provide for sealingly fixing said guides 13 and said glass pane 11 to each other. It will be noted that the screws 30 have a head with no slot (fig. 30) and with a seat for a special anti-burglary safety tool head.

On the other hand, said hatch 20 supports, on its Internal face, elastic shoe means, comprising a pair of elastic shoes 23, a lower one and an upper one, that each rest against a corresponding surface of the lateral wall 13.4 of said guides 13, opposite to said wall 13.1 with groove 13.2.

In particular, each elastic shoe 23 is produced by means of an elastic metal strip substantially in the shape of a leaf spring, fixed centrally with respect to said hatch 20 and that rests with the free arms against the corresponding surface of the lateral wall 13.4 of a respective straight guide 13. By means of this arrangement, said hatch 20 is elastically stressed by said elastic shoes 23 to maintain its sealed closing position of said opening 12 of the glass pane 11, when It Is arranged In correspondence with said grooves 13.2 of the straight guides 13, while the hatch 20 can be placed In a distal position with respect to said grooves 13.2, that is to say in a disengaged position of the opening 12, by sliding along the remaining part of the guides 13, in opposition to the elastic force of the shoes 23. In said disengaged position of the opening 12, said hatch 20 Is elastically and stably retained with respect to said guides 13 themselves by means of the elastic force of said shoes 23.

A handle 14 is fixed on the internal surface of the hatch 20 and allows manual gripping by a user, who is able to cause linear movement of the hatch 20 along the straight guides 13 between said two positions.

To ensure stable maintenance of said hatch 20 In the engaged position closing the opening 12 in the glass pane 11, each straight guide 13 supports lock pawl means, comprising a respective lock pawl 15 (figures 31 - 35), In the form of a rotating wheel integral with a pin 15.1 with transversal axis and supported by means of two opposite support flaps 13.5, with corresponding holes, integral with and protruding from the bottom of each straight guide 13. An opening 13.6 Is provided In the intermediate side 13.7 of each straight guide 13, between said support flaps 13.5, and In correspondence with an end area of said groove 13.2 In the straight guide 13. Said wheel pawl 15 has (fig. 31) a first sector 15.2 having a toothed curved lateral surface, for safe manual gripping, a second sector 15.3 having a flat lateral surface and a third sector 15.4 having for example a smooth curved lateral surface. In particular, said wheel pawl 15 has said first toothed sector 15.2 on the outside of the respective guide 13 and can be manually moved, respectively, to a first rotation position integral with said pin 15.1, In which said second sector 15.3 has its flat lateral surface disposed flush with the internal surface of said intermediate side 13.7 of said straight guide 13, and in a second rotation position, in which said third sector 15.4 of the pawl 15 emerges on the inside of said straight guide 13 and is disposed In contact with the hatch 20. In particular, said hatch 20 can be manually transferred along the straight guides 13, disengaging the opening 12 of the glass pane 11, when said wheel pawl 15 Is found In said first rotation position, while said hatch 20 Is fastened In a burglar-proof arrangement of said same opening 12, when said wheel pawl 15 is disposed in said second rotation position, in which it rests against the internal surface of the hatch itself. To render said second rotation position of said wheel pawl 15 stable, the latter supports permanent magnet means 15.5, with a cylinder shape, that protrude In the direction of the pin 15.1 and that, in said second rotation position of said wheel pawl 15, are opposed to a corresponding magnetic Interaction element 15.6 (fig. 23) in ferromagnetic material, in the shape of a pad, supported in a fixed manner by a respective flap 13.5 and that interacts magnetically with said magnet means 15.5. The force of magnetic attraction between rotating magnet 15.5 and fixed element 15.6 renders stable the arrangement of the wheel pawl 15 in contact with the hatch 20 against attempts to break into the hatch itself from the outside of the motor vehicle in which the window 10 is fitted.

Operation of the window 10 according to this embodiment of the invention is clear from the description given above.

The present invention, therefore, provides a fixed window of a motor vehicle with opening hatch, which makes It possible to achieve, in a simple and effective manner, the following technical advantages:
- Impermeability to water, which is mainly guaranteed by the seal gasket 22, for example in epdm, arranged around the hatch 20, the edge 21.1 of which has a constant inclination that, with respect to the corresponding edge 12.1 of the opening 12, produces a positive fit coupling, with self-centring effect in the shape of a conical centring, and subjects the gasket 22 itself, once the hatch 20 has been positioned in its seat 12.1, to a uniform compression along the whole of its contour. With the same effect of sealing against atmospheric agents, the screws 30 with seal ring 30.1 are used to fix the sliding guides 13 of the hatch 20 with respect to the fixed glass pane 11;
- burglar-proof closing of the hatch 20, which prevents opening of the window 10 from the outside. The two wheel pawls 15 turn In contact with the hatch 20 in the closed position of the opening 12 to prevent the hatch itself from moving back, even under force, with respect to the fixed glass pane 11. Furthermore, the magnetic means 15.5 co-operating with the magnetic Interaction element 15.6 ensure stable positioning of the wheel pawl 15 in contact with the hatch 20, even in the presence of strong vibrations when the motor vehicle is running.

As can be seen from the above, the present invention allows the aims stated in the introduction to this description to be achieved in a simple and effective manner.

## Claims

1. Fixed window (10) of a motor vehicle with opening hatch (20), comprising a glass window pane (11), fixed to close a corresponding opening of a door of a motor vehicle and having an opening (12) with peripheral edge (12.1), which is closed by means of said hatch (20), which has a peripheral edge (21.1) and is arranged sliding with respect to sliding guide means (13), **characterized in that** it comprises:
- a continuous bevelling of said edge (12.1) of said opening (12), forming a flared continuous chamfer (12.2) increasing toward the inner surface of said glass pane (11);
- a continuous bevelling of said edge (21.1) of said hatch (20), forming a flared continuous chamfer (21.2) decreasing toward the outer surface of said hatch (20), so that said hatch (20), arranged to close said opening (12), produces with the same opening (12) a positive fit coupling in mutual interpenetration;
- a sealing gasket (22) surrounding said edge (21.1) of said hatch (20), which ensures, when said hatch (20) is arranged to close said opening (12), the impermeability of said opening (12) of the window (10), as a result of its elastic compression between said opposed chamfers (12.2, 21.2);
- elastic shoe means (23), integral with respect to said hatch (20), which rest on a corresponding surface (13.4) of said sliding guide means (13) and which elastically stress said hatch (20) to maintain said sealed closing position of said opening (12) of said fixed glass pane (11), while they allow movement of said hatch (20) to the disengaged position of said opening (12), through sliding along a part of said sliding guide means (13), in opposition to the elastic force of said shoe means (23), and maintain said hatch (20) in said disengaged position of said opening (12) by means of their elastic force.

2. Fixed window (10) of a motor vehicle with opening hatch (20) according to claim 1, **characterized In that** It comprises lock pawl means (15), supported revolving with respect to said sliding guide means (13) through transverse axis pin means (15.1), configured as a revolving wheel with a first sector (15.2) having a toothed curvilinear lateral surface and a second sector (15.3) having a flat lateral surface, and **in that** said pawl means (15) have said first sector (15.2) extending outside said sliding guide means (13), to allow manual positioning of said lock pawl means (15), respectively, in a first rotation position, in which said second sector (15.3) has the flat lateral surface flush with a surface of said sliding guide means (13), and In a second rotation position, in which a third sector (15.4) of said pawl means (15) is arranged in contact with said hatch (20) as burglar proof lock of the same hatch,

3. Fixed window (10) of a motor vehicle with opening hatch (20) according to claim 2, **characterized in that** said lock pawl means (15) comprise permanent magnet means (15.5), integral in rotation, while at least one magnetic interaction member (15.6) is supported fixed with respect to said sliding guide means (13) and is arranged to interact magnetically with said permanent magnet means (15.5), when said third sector (15.4) of said pawl means (15) is arranged in contact with said hatch (20).

4. Fixed window (10) of a motor vehicle with opening hatch (20) according to claim 2 and/or 3, **characterized In that** said sliding guide means (13) comprise at least one channel guide with U-shaped cross section open toward said opening (12) of said fixed glass pane (11) and have, In an Intermediate side (13.7) of said at least one channel guide, an opening (13.6) through which said third sector (15.4) of said pawl means (15) emerge inside said same channel guide, when it is arranged in contact with said hatch (20).

5. Fixed window (10) of a motor vehicle with opening hatch (20) according to one or more of the preceding claims, **characterized in that** said sliding guide means (13) comprise two channel guides with U-shaped cross section, parallel to each other, arranged on opposite sides of said edge (12.1) of said opening (12), open toward said opening (12) of said fixed glass pane (11) and each having, in a first lateral wall (13.1) that Is juxtaposed against the inner surface of said fixed glass pane (11), a groove (13.2) that is facing said hatch (20) arranged to close said opening (12).

6. Fixed window (10) of a motor vehicle with opening hatch (20) according to one or more of the preceding claims, **characterized in that** said sliding guide means (13) have mounting through holes (13.3) coinciding with analogous holes in said fixed glass pane (11) and **in that** it comprises screws (30) with elastic sealing ring (30.1) arranged passing through said holes and that sealingly fix said sliding guide means (13) and said fixed glass pane (11) to each other.

7. Fixed window (10) of a motor vehicle with opening hatch (20) according to one or more of the preceding claims, **characterized In that** said sliding guide means (13) comprise two channel guides with U-shaped cross section, parallel to each other, arranged on opposite sides of said edge (12.1) of said opening (12), open toward said opening (12) of said fixed glass pane (11) and each having a second lateral wall (13.4) distal with respect to the inner surface of said fixed glass pane (11), and **in that** said hatch (20) supports, on the Inner face thereof, a pair of elastic shoes (23), one for each of said two channel guides of said sliding guide means (13), which each rest against a respective second lateral wall (13.4) of said two channel guides.

8. Fixed window (10) of a motor vehicle with opening hatch (20) according to claim 7, **characterized in that** each elastic shoe (23) is produced by means of an elastic metal strip substantially in the shape of a leaf spring, fixed centrally with respect to said hatch (20) and that rests with free arms against said respective second lateral wall (13.4) of a respective channel guide of said sliding guide means (13).

## Patentansprüche

1. Feststehendes Kraftfahrzeugfenster (10) mit Öffnungsklappe (20), umfassend eine Fensterscheibe (11), die zum Verschließen einer entsprechenden Öffnung einer Kraftfahrzeugtür befestigt ist und eine Öffnung (12) mit einem Umfangsrand (12.1) aufweist, die mittels der besagten Klappe (20) verschlossen wird, die einen Umfangsrand (21.1) aufweist und in Bezug auf Gleitführungsmittel (13) gleitend angeordnet ist, **dadurch gekennzeichnet, dass** sie Folgendes umfasst
- eine kontinuierliche Gehrung der besagten Kante (12.1) der besagten Öffnung (12), die eine Abschrägung (12.2) mit einem kontinuierlichen ausgestellten wachsenden Verlauf in Richtung der Innenfläche der besagten Scheibe (11) bildet;
- eine kontinuierliche Gehrung der besagten Kante (21.1) der besagten Klappe (20), die eine Abschrägung (21.2) mit einem kontinuierlichen ausgestellten abnehmenden Verlauf in Richtung der Außenfläche der besagten Klappe (20) bildet, so dass die besagte Klappe (20), die zur Verschließung der besagten Öffnung (12) angeordnet ist, mit der besagten selbigen Öffnung (12) eine Formkopplung beim gegenseitigen Durchdringen realisiert;
- eine Dichtung (22), die den besagten Rand (21.1) der besagten Klappe (20) umhüllt und die, wenn die besagte Klappe (20) zum Verschließen der besagten Öffnung (12) angeordnet ist, die Wasserdichtheit der besagten Öffnung (12) des Fensters (10) durch die Wirkung ihrer elastische Kompression zwischen den besagten gegenüberliegenden Abschrägungen (12.2, 21.2) gewährleistet;
- elastische Schlittenmittel (23), die fest mit der besagten Klappe (20) verbunden sind und an einer entsprechenden Fläche (13.4) der besagten Gleitführungsmittel (13) anliegen, und die die besagte Klappe (20) elastisch in Anspruch nehmen, um die besagte abgedichtete Position der besagten Öffnung (12) der besagten feststehenden Scheibe (11) beizubehalten, während sie die Verschiebung der besagten Klappe (20) in eine Position der Freigabe der besagten Öffnung (12) durch Gleiten entlang eines Teils der besagten Gleitführungsmittel (13) ermöglichen, in Gegenwirkung zur elastischen Kraft der besagten Schlittenmittel (23), und die besagte Klappe (20) durch ihre eigene elastische Kraft in der besagten Freigabeposition der besagten Öffnung (12) halten.

2. Feststehendes Kraftfahrzeugfenster (10) mit einer Öffnungsklappe (20) gemäß Anspruch 1, **dadurch gekennzeichnet, dass** es Klinkenanschlagmittel (15) umfasst, die drehbar gelagert sind in Bezug auf die besagten Gleitführungsmittel (13) mittels Stiftmitteln (15.1) mit Querachse, die als drehbare Rolle mit einem ersten Sektor (15.2) mit einer gekrümmten, gezackten Seitenfläche und einem zweiten Sektor (15.3) mit einer flachen Seitenfläche ausgebildet ist, und **dadurch gekennzeichnet, dass** die besagten Klinkenanschlagmittel (15) den besagten ersten Sektor (15. 2) außerhalb der besagten Gleitführungsmittel (13) aufweisen, um die manuelle Positionierung der besagten Klinkenanschlagmittel (15) jeweils in einer ersten Drehposition zu ermöglichen, in der der besagte zweite Sektor (15.3) die flache Seitenfläche aufweist, die an einer Oberfläche der besagten Gleitführungsmittel (13) anliegt, und in einer zweiten Drehposition, in der ein dritter Sektor (15.4) der besagten Klinkenanschlagmittel (15) als einbruchsicherer Anschlag der besagten Klappe (20) in Kontakt mit der selbigen Klappe gebracht wird.

3. Feststehendes Kraftfahrzeugfenster (10) mit einer Öffnungsklappe (20) gemäß Anspruch 2, **dadurch gekennzeichnet, dass** die besagten Klinkenanschlagmittel (15) Permanentmagnetmittel (15.5) umfassen, die bei Drehung miteinander verbunden sind, während mindestens ein magnetisches Wechselwirkungselement (15.6) fest in Bezug auf die besagten Gleitführungsmittel (13) gelagert und so angeordnet ist, dass es magnetisch mit den besagten Permanentmagnetmittel (15.5) zusammenwirkt, wenn der besagte dritte Sektor (15.4) der besagten Klinkenanschlagmittel (15) in Kontakt mit der besagten Klappe (20) gebracht wird.

4. Feststehendes Kraftfahrzeugfenster (10) mit einer Öffnungsklappe (20) gemäß Anspruch 2 und/oder 3, **dadurch gekennzeichnet, dass** die besagten Gleitführungsmittel (13) mindestens eine zur besagten Öffnung (12) der besagten feststehenden Scheibe (11) hin offene Kanalführung mit U-förmigem Querschnitt umfassen und in einer Zwischenseite (13.7) der mindestens einen Kanalführung eine Öffnung (13.6) aufweisen, durch die der besagte dritte Sektor (15.4) der besagten Klinkenanschlagmittel (15) im Inneren der selbigen Kanalführung austritt, wenn er in Kontakt mit der besagten Klappe (20) gebracht wird.

5. Feststehendes Kraftfahrzeugfenster (10) mit einer Öffnungsklappe (20) gemäß einem oder mehreren der vorhergehenden Ansprüche, **dadurch gekennzeichnet, dass** die besagten Gleitführungsmittel (13) zwei zueinander parallele Kanalführungen mit U-förmigem Querschnitt umfassen, die auf gegenüberliegenden Seiten der besagten Kante (12.1) der besagten Öffnung (12) angeordnet sind, geöffnet in Richtung der besagten Öffnung (12) der besagten feststehenden Scheibe (11) und jede aufweisend in einer ersten Seitenwand (13.1), die an die Innenfläche der besagten feststehenden Scheibe (11) angrenzt, eine Aussparung (13.2), die der besagten Klappe (20) zugewandt und so angeordnet ist, dass sie die besagte Öffnung (12) verschließt.

6. Feststehendes Kraftfahrzeugfenster (10) mit einer Öffnungsklappe (20) gemäß einem oder mehreren der vorhergehenden Ansprüche, **dadurch gekennzeichnet, dass** die besagten Gleitführungsmittel (13) Durchgangslöcher zur Montage (13.3) aufweisen, die mit gleichartigen Löchern in der besagten feststehenden Scheibe (11) übereinstimmen, und **dadurch gekennzeichnet, dass** es Schrauben (30) mit einem elastischen Dichtring (30.1) umfasst, die durch die besagten Löcher hindurch angeordnet sind und die die besagten Gleitführungsmittel (13) und die besagte feststehende Scheibe (11) abdichtend gegenseitig befestigen.

7. Feststehendes Kraftfahrzeugfenster (10) mit einer Öffnungsklappe (20) gemäß einem oder mehreren der vorhergehenden Ansprüche, **dadurch gekennzeichnet, dass** die besagten Gleitführungsmittel (13) zwei zueinander parallele Kanalführungen mit U-förmigem Querschnitt umfassen, die auf gegenüberliegenden Seiten des besagten Randes (12.1) der besagten Öffnung (12) angeordnet sind, geöffnet in Richtung der besagten Öffnung (12) der besagten feststehenden Scheibe (11) und jede aufweisend eine zweite Seitenwand (13.4), die in Bezug auf die Innenfläche der besagten feststehenden Scheibe (11) entfernt ist, und **dadurch gekennzeichnet, dass** die besagte Klappe (20) auf ihrer Innenfläche ein Paar elastischer Schlitten (23) trägt, einen für jede der besagten beiden Kanalführungen der besagten Gleitführungsmittel (13), wobei jede von ihnen an einer jeweiliger zweiten Seitenwand (13.4) der besagten beiden Kanalführungen anliegt.

8. Feststehendes Kraftfahrzeugfenster (10) mit einer Öffnungsklappe (20) gemäß Anspruch 7, **dadurch gekennzeichnet, dass** jeder elastische Schlitten (23) mittels einer elastischen, im Wesentlichen als Blattfeder ausgebildeten Metallplatte hergestellt ist, die mittig in Bezug auf die besagte Klappe (20) befestigt ist und mit freien Armen an der besagten jeweiligen zweiten Seitenwand (13.4) einer jeweiligen Kanalführung der besagten Gleitführungsmittel (13) anliegt.

## Revendications

1. Vitre fixe (10) d'un véhicule à moteur avec une trappe ouvrante (20), comprenant une glace (11) de vitre, fixe pour fermer une ouverture correspondante dans une portière d'un véhicule à moteur, et ayant une ouverture (12) avec un bord périphérique (12.1), qui est fermée par ladite trappe (20), ayant un bord périphérique (21.1) et étant disposée de manière coulissante par rapport à des guides coulissants (13), **caractérisée par le fait qu'**elle comprend :
- un chanfreinage continu dudit bord (12.1) de ladite ouverture (12), formant un chanfrein (12.2) avec une forme évasée continue augmentant vers la surface interne de ladite glace (11) ;
- un chanfreinage continu dudit bord (21.1) de ladite trappe (20), formant un chanfrein (21.2) ayant une forme évasée continue diminuant vers la surface externe de ladite trappe (20), de sorte que ladite trappe (20), placée pour fermer ladite ouverture (12), crée avec ladite ouverture (12) un couplage de forme en interpénétration réciproque ;
- un joint (22) enveloppant ledit bord (21.1) de ladite trappe (20), qui assure, lorsque ladite trappe (20) est placée pour fermer ladite ouverture (12), l'étanchéité de ladite ouverture (12) de la vitre, par sa compression élastique entre lesdits chanfreins opposés (12.2, 21.2) ;
- de moyens à patin élastique (23), solidaires de ladite trappe (20), qui reposent contre une surface correspondante (13.4) desdits moyens de guidage coulissants (13), et qui sollicitent élastiquement ladite trappe (20) pour maintenir ladite position de fermeture étanche de ladite ouverture (12) de ladite glace fixe (11), tout en permettant le déplacement de ladite trappe (20) dans une position de dégagement de ladite ouverture (12), en glissant le long d'une partie desdits moyens de guidage coulissants (13), antagoniste à la force élastique desdits moyens à patin (23), et maintenant ladite trappe (20) dans ladite position de désengagement de ladite ouverture (12) par sa propre force élastique.

2. Vitre fixe (10) d'un véhicule à moteur avec une trappe ouvrante (20) selon la revendication 1, **caractérisée par le fait qu'**elle comprend des moyens à cliquet d'arrêt (15), supportés de manière rotative par rapport auxdits moyens de guidage coulissants (13) à l'aide de moyens à doigt (15.1) avec un axe transversal, configurés comme une roulette pivotante possédant un premier secteur (15.2) ayant une surface latérale curviligne dentelée et un second secteur (15.3) ayant une surface latérale plate, et **par le fait que** lesdits moyens à cliquet (15) possèdent ledit premier secteur (15.2) s'étendant vers l'extérieur desdits moyens de guidage coulissants (13), pour permettre le positionnement manuel desdits moyens à cliquet d'arrêt (15), respectivement, dans une première position de rotation, dans laquelle ledit second secteur (15.3) a la surface latérale plate à fil d'une surface dudit moyen de guidage coulissant (13), et dans une deuxième position de rotation, dans laquelle un troisième secteur (15.4) dudit moyen à cliquet (15) est placé en contact avec ladite trappe (20) en tant qu'arrêt anti-effraction de ladite trappe.

3. Vitre fixe (10) d'un véhicule à moteur avec une trappe ouvrante (20) selon la revendication 2, **caractérisée par le fait que** lesdits moyens à cliquet (15) comprennent des moyens à aimant permanent (15.5), solidaires en rotation, tandis qu'au moins un organe d'interaction magnétique (15.6) est supporté de manière fixe par rapport auxdits moyens de guidage coulissants (13) et est disposé pour interagir magnétiquement avec lesdits moyens à aimant permanent (15.5), lorsque ledit troisième secteur (15.4) desdits moyens à cliquet (15) est placé en contact avec ladite trappe (20).

4. Vitre fixe (10) d'un véhicule à moteur avec une trappe ouvrante (20) selon la revendication 2 et/ou 3, **caractérisée par le fait que** lesdits moyens de guidage coulissants (13) comprennent au moins un guide à canal avec une section transversale en forme de U ouverte vers ladite ouverture (12) de ladite glace fixe (11), et ont, dans un côté intermédiaire (13.7) dudit au moins un guide à canal, une ouverture (13.6) à travers laquelle ledit troisième secteur (15.4) desdits moyens à cliquet (15) émerge à l'intérieur dudit guide à canal, lorsqu'il est placé en contact avec ladite trappe (20).

5. Vitre fixe (10) d'un véhicule à moteur avec une trappe ouvrante (20) selon un ou plusieurs des revendications précédentes, **caractérisée par le fait que** lesdits moyens de guidage coulissants (13) comprennent deux guides à canal avec section transversale en U, parallèles entre eux, placés de part et d'autre dudit bord (12.1) de ladite ouverture (12), ouverts vers ladite ouverture (12) de ladite glace fixe (11), et présentant chacun, dans une première paroi latérale (13.1) qui est juxtaposée contre la surface intérieure de ladite glace fixe (11), une encoche (13.2) faisant face à ladite trappe (20) placée pour fermer ladite ouverture (12).

6. Vitre fixe (10) d'un véhicule à moteur avec une trappe ouvrante (20) selon un ou plusieurs des revendications précédentes, **caractérisée par le fait que** lesdits moyens de guidage coulissants (13) ont des trous passants de montage (13.3) auxquels correspondent des trous homologues dans ladite glace fixe (11) et **par le fait qu'**elle comprend des vis (30) avec circlip de retenue (30.1) disposées à travers lesdits trous et qui fixent réciproquement de manière étanche lesdits moyens de guidage coulissants (13) et ladite glace fixe (11).

7. Vitre fixe (10) d'un véhicule à moteur avec une trappe ouvrante (20) selon un ou plusieurs des revendications précédentes, **caractérisée par le fait que** lesdits moyens de guidage coulissants (13) comprennent deux guides à canal avec section transversale en U, parallèles entre eux, disposés sur des côtés opposés dudit bord (12.1) de ladite ouverture (12), ouverts vers ladite ouverture (12) de ladite glace fixe (11) et ayant chacun une seconde paroi latérale (13.4) distale par rapport à la surface intérieure de ladite glace fixe (11), et **par le fait que** ladite trappe (20) supporte, sur sa face intérieure, une paire de patins élastiques (23), un pour chacun desdits deux guides à canal desdits moyens de coulissement (13), chacun d'eux reposant contre une seconde paroi latérale respective (13.4) desdits deux guides à canal.

8. Vitre fixe (10) d'un véhicule à moteur avec une trappe ouvrante (20) selon la revendication 7, **caractérisée par le fait que** chaque patin élastique (23) est réalisé au moyen d'une feuille de métal élastique substantiellement en forme de ressort à lame, fixée centralement par rapport à ladite trappe (20) et reposant avec des bras libres contre ladite seconde paroi latérale (13.4) d'un guide à canal respectif desdits moyens de guidage coulissants (13).
